(19)

Europäisches
Patentamt
European
Patent Office
Office européen
des brevets

(11) **EP 3 385 222 A1**

(12) **EUROPEAN PATENT APPLICATION**
published in accordance with Art. 153(4) EPC

(43) Date of publication:
**10.10.2018 Bulletin 2018/41**

(21) Application number: **16870725.5**

(22) Date of filing: **30.11.2016**

(51) Int Cl.:
*C01B 32/25* (2017.01)  *C01B 32/182* (2017.01)
*C23C 4/04* (2006.01)  *C23C 18/52* (2006.01)

(86) International application number:
**PCT/JP2016/085595**

(87) International publication number:
**WO 2017/094788 (08.06.2017 Gazette 2017/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **01.12.2015 JP 2015235235**

(71) Applicant: **Kabushiki Kaisha Kobe Seiko Sho
(Kobe Steel, Ltd.)
Kobe-shi, Hyogo 651-8585 (JP)**

(72) Inventors:
• **WADA Ryutaro**
  **Tokyo 141-8688 (JP)**
• **UEDA Masaya**
  **Hyogo 651-8585 (JP)**
• **NAKAYAMA Takenori**
  **Hyogo 651-2271 (JP)**

(74) Representative: **Müller-Boré & Partner
Patentanwälte PartG mbB
Friedenheimer Brücke 21
80639 München (DE)**

(54) **COATED PARTICLE**

(57)    Provided is a coated particle obtained by coating the surface of a base material particle with carbon particles produced by means of a step of disposing an explosive substance, which is a liquid at ordinary temperature and pressure, at the periphery of a raw material substance that contains an aromatic compound having 3 or more nitro groups and a step of detonating the explosive substance.

FIG. 2

**Description**

Technical Field

The present invention relates to a coated particle constituted by coating a surface of a base material particle with carbon particles obtained by a detonation method.

Background Art

Nano-scale diamond (also referred to as "nanodiamond") has a large number of excellent properties such as a high hardness and an extremely low coefficient of friction, and therefore, it has been already utilized in various fields and its development of application has been investigated as an extremely promising new material.
It has been known that nanodiamond can be synthesized by, for example, utilizing a detonation reaction of a high explosive. This synthesis method is generally called a detonation method, in which detonation is performed with only a raw material substance containing an aromatic compound having three or more nitro groups (hereinafter referred to as "low explosive raw material") as a carbon source, and carbon atoms decomposed and liberated from a molecule constituting the low explosive raw material by the detonation reaction are formed as nanodiamond at high temperature and high pressure during the detonation (for example, see Non-Patent Literature 1).
The production of nanodiamond by the detonation method has hitherto been performed in, for example, the East European countries such as Russia and the Ukraine, the United States of America, China, and the like. In these countries, since a military waste low explosive is inexpensively available as the low explosive raw material that is the carbon source, trinitrotoluene (TNT) has been used alone, or an explosive mixture of TNT and cyclotrimethylenetrinitramine (RDX, also referred to as hexogen) or cyclotetramethylenetetranitramine (HMX: also referred to as octogen), or the like has been used.

Citation List

Patent Literature

Patent Literature 1: Japanese Patent No. 4245310
Patent Literature 2: Japanese Patent No. 5155975

Non-Patent Literature

Non-Patent Literature 1: Yozo Kakudate (author), "2-3. Dynamic High Pressure (Detonation Method)", Industrial Diamond Association of Japan (editor), "Handbook of Diamond Technology", NGT, January 2007, pp. 28 to 33

Summary of the Invention

Problem that the Invention is to Solve

It is anticipated that the demanded amount of nanodiamond will increase more and more in the future with the development of its application. However, as for the production using a military waste low explosive, there is a limit in the production volume. Therefore, there is a possibility that the supply will be short in the international market in the future. Then, the domestic production is expected. However, according to the aforementioned background-art method, nanodiamond cannot be produced in high yield. Therefore, there is a problem that the produced nanodiamond is economically unprofitable.
Carbon particles produced by a detonation method contain not only nanodiamond but also carbon impurities mainly composed of nano-scale graphite carbon (hereinafter referred to as "nanographite") which is a carbon fraction having no diamond structure. That is, the raw material substance causes detonation, whereby the raw material substance is decomposed to an atomic level, and carbon atoms liberated therefrom without being oxidized aggregate in a solid state to form carbon particles. During the detonation, the raw material substance is in a high-temperature high-pressure state due to a decomposition reaction. However, the raw material substance is immediately expanded and cooled. This process from the high-temperature high-pressure state to the reduced-pressure and cooling state is caused within a very short time as compared with normal combustion or deflagration that is an explosion phenomenon slower than detonation, and therefore, there is no time when the aggregated carbon grows largely. Thus, nanodiamond is formed.

When a high explosive (such as an explosive mixture of TNT and RDX) known as a typical high explosive causing detonation is used as the raw material substance, pressure in the detonation becomes high enough to allow produced carbon particles to contain plenty of nanodiamond as expected easily from a thermodynamic equilibrium phase diagram of carbon. On the other hand, carbon atoms that do not form a diamond structure become nanographite or the like.

Of carbon particles, nanographite etc. other than nanodiamond have been regarded as undesired in order to use the excellent properties of nanodiamond. Therefore, the background art has focused on how to eliminate carbon impurities such as nanographite as much as possible to thereby purify nanodiamond by various purification methods or chemical treatments (for example, see Patent Literature 1 or 2). However, nanographite is, for example, lower in hardness, and higher in electric conductivity than nanodiamond. In addition to such different physical properties from nanodiamond, nanographite is also characterized in that various kinds of atoms or functional groups other than carbon can be coupled with nanographite so that new functions can be provided. Accordingly, nanographite has attracted attention as a promising new material capable of providing various properties when it is used as a mixture with nanodiamond.

An object of the invention is to produce carbon particles efficiently by a detonation method using a low explosive raw material, and provide a new material using the obtained carbon particles.

Means for Solving the Problem

In a coated particle according to the invention capable of solving the aforementioned problem, a surface of a base material particle is coated with carbon particles produced by a step of disposing an explosive substance which shows a liquid state at normal temperature and normal pressure in a periphery of a raw material substance containing an aromatic compound having three or more nitro groups, and a step of detonating the explosive substance.

The carbon particles may be fluorinated.

The invention also includes a functional material in which the aforementioned coated particles are supported on a surface of a substrate material.

A coated particle according to the invention can be produced by a method including a step of disposing an explosive substance, which shows a liquid state at normal temperature and normal pressure, in a periphery of a raw material substance containing an aromatic compound having three or more nitro groups, a step of detonating the explosive substance to obtain carbon particles, and a step of coating surfaces of base material particles with the obtained carbon particles by a mechanical combination method.

The surface of the base material particle may be coated with the carbon particles by the mechanical combination method after the carbon particles are fluorinated.

When the coated particles obtained by the aforementioned production method are supported on a surface of a substrate material, a functional material according to the invention can be produced.

The coated particles obtained by the aforementioned production method may be supported on a surface of a substrate material and then fluorinated to produce a functional material according to the invention.

The coated particles may be supported on the surface of the substrate material by spraying, rolling or plating.

In the present description, a high explosive means a substance capable of performing a detonation reaction, and may include a low explosive raw material. In addition, an explosive substance means a substance causing a sudden combustion reaction. Explosive substances are generally roughly classified into a solid explosive having no fluidity at normal temperature and normal pressure and a liquid high explosive having fluidity at normal temperature and normal pressure. Unless otherwise indicated particularly, the explosive substance herein means a liquid high explosive having fluidity at normal temperature and normal pressure.

Advantage of the Invention

According to a production method of the invention, carbon particles containing nanodiamond and nanographite can be obtained by a denotation method using a low explosive raw material and a liquid high explosive together. The carbon particles have a higher content proportion of nanodiamond than background-art ones obtained by a denotation method using a low explosive raw material alone or using a low explosive raw material and a solid explosive together. When a surface of a base material particle is coated with the carbon particles obtained thus, a new material can be provided.

Brief Description of the Drawings

[FIG 1] FIG. 1 is a sectional view schematically showing an example of an explosive device which is used in a production method of the present invention.

[FIG. 2] FIG. 2 is a schematic view for explaining a process of mechanical combination.

[FIG. 3] FIG. 3 shows a drawing substitute photograph in which carbon particles obtained in Experimental Example 3 (3#5) were taken.

[FIG. 4] FIG. 4 shows transmission electron microscopic (TEM) photographs of the carbon particles obtained in Experimental Example 3 (3#5).

[FIG. 5] FIG. 5 is an X-ray diffraction chart of the carbon particles obtained in Experimental Example 3 (3#5).

[FIG. 6] FIG. 6 is a graph showing a calibration curve used in determining the content proportion of diamond in carbon particles.

[FIG. 7] FIG. 7 shows a drawing substitute photograph a in which a surface of an urethane resin particle was taken, and a drawing substitute photograph b in which a surface of the urethane resin particle coated with carbon particles was taken.

[FIG. 8] FIG. 8 shows drawing substitute photographs in which a section of the coated particle was taken.

[FIG. 9] FIG. 9 shows a drawing substitute photograph a in which a surface of an inactivated alumina particle was taken, and a drawing substitute photograph b in which a surface of the inactivated alumina particle coated with carbon particles was taken.

[FIG. 10] FIG. 10 shows drawing substitute photographs in which a section of the coated particle was taken.

[FIG. 11] FIG. 11 shows a drawing substitute photograph a in which a surface of an aluminum particle was taken, and a drawing substitute photograph b in which a surface of the aluminum particle coated with carbon particles was taken.

[FIG. 12] FIG. 12 shows drawing substitute photographs in which a section of the coated particle was taken.

[FIG. 13] FIG. 13 shows a drawing substitute photograph a in which a SUS304 stainless steel sheet used as a substrate material was taken, and a drawing substitute photograph b in which a functional material having coated particles supported on the surface of the substrate material was taken.

[FIG. 14] FIG. 14 shows a drawing substitute photograph a in which a section of the functional material shown in the photograph b of FIG. 13 was observed and taken by an optical microscope, and a drawing substitute photograph b in which a part enclosed by a rectangle in the photograph a of FIG. 14 is enlarged.

Mode for Carrying Out the Invention

The present inventor et al. studied a method in which carbon particles containing nanodiamond and nanographite can be produced efficiently by a detonation method. As a result, the inventor et al. found that for production of carbon particles containing nanodiamond and nanographite by a detonation method using a low explosive raw material, carbon particles having a larger content of nanodiamond than in the aforementioned background art can be obtained when a detonation reaction is performed with an explosive substance, which shows a liquid state at normal temperature and normal pressure, disposed around the low explosive raw material. Thus, the inventor et al. applied a patent as Japanese Patent Application No. 2014-113057. After that, as a result of further extensive studies, the inventor et al. found that a coated particle in which a surface of a base material particle is coated with carbon particles obtained by the aforementioned production method is useful as a new material. Thus, the inventor et al. completed the present invention.

First, description will be made about a method for producing the aforementioned carbon particles. The method for producing the carbon particles, which will be described below, is the same as in the aforementioned Japanese Patent Application No. 2014-113057.

<<Method for Producing Carbon Particles>>

The aforementioned carbon particles are produced by a detonation method. The method for producing the carbon particles is characterized by including a step of disposing an explosive substance, which shows a liquid state at normal temperature and normal pressure, in a periphery of a raw material substance containing an aromatic compound having three or more nitro groups, and a step of detonating the explosive substance. The method will be described in the order of the steps.

In the aforementioned production method, first, an explosive substance which shows a liquid state at normal temperature and normal pressure is disposed in a periphery of a raw material substance containing an aromatic compound having three or more nitro groups. The aromatic compound having three or more nitro groups is a low explosive raw material contained in the raw material substance as a carbon source for the detonation method. On the other hand, the explosive substance which shows a liquid state at normal temperature and normal pressure is a substance causing stable detonation to produce carbon particles from the raw material substance. When a molecule forming the explosive substance contains carbon atoms, the explosive substance may serve as a carbon source together with the raw material substance.

An example of the aromatic compound having three or more nitro groups may include a compound having a structure in which three or more hydrogen atoms of an aromatic ring such as benzene, toluene or anthracene are substituted with nitro groups.

The aforementioned aromatic compound may have a substituent other than the nitro groups. Examples of such substituents may include an alkyl group, a hydroxy group, a hydroxyalkyl group, an amino group, a halogen group, and the like.

There may be a case where position isomers are present depending on the positional relation of the nitro groups or the substituents. However, all of the position isomers can be used in the aforementioned production method. For example, when the aromatic compound is trinitrotoluene, 6 kinds of isomers are conceivable in accordance with the positional relation among the three nitro groups and one methyl group. In the present description, trinitrotoluene means 2, 4, 6-trinitrotoluene unless otherwise stated.

Examples of such aromatic compounds may include trinitrotoluene (also referred to as TNT), trinitrophenylmethylnitramine (also referred to as tetryl), etc. Of those aromatic compounds, TNT is particularly preferred because of its easy availability. Each of the aromatic compounds may be used alone, or two or more kinds of the aromatic compounds may be used together.

In addition, specific examples of the raw material substance containing the aromatic compound may include an explosive mixture having RDX and TNT as its major components, such as Composition B, Cyclotol (75/25), (70/30) or (65/30), Composition B-2; an explosive mixture having HMX and TNT as its major components, such as Octol (75/25), and so on. Specific examples using two or more kinds of the aromatic compounds may include an explosive mixture having TNT and tetryl as its major components, such as Tetritol.

The content proportion of the aromatic compound having three or more nitro groups in the aforementioned raw material substance is generally 50 mass% or more, preferably 80 mass% or more, more preferably 90 mass% or more, and still more preferably 95 mass% or more, relative to the total mass of the raw material substance. It is the most preferable that the content proportion of the aromatic compound having three or more nitro groups has an upper limit of 100 mass%. However, the upper limit thereof may be preferably 99 mass% or about 98 mass%.

A liquid high explosive which shows fluidity at normal temperature and normal pressure is used as the explosive substance in the aforementioned production method.

When the liquid high explosive is used as the explosive substance, the degree of freedom in shape is high, an increase in size is easy, and operability or safety can be improved, as compared with the case of using a solid high explosive.

The aforementioned liquid high explosive may be free from carbon as its constituent element.

Examples of such liquid high explosives may include a mixture of hydrazine and hydrazine nitrate, a mixture of hydrazine and ammonium nitrate, a mixture of hydrazine, hydrazine nitrate and ammonium nitrate, nitromethane, a mixture of hydrazine and nitromethane, and the like. In the present description, hydrazine may include hydrazine hydrate that is a hydrate thereof.

It is important to suitably select and use the kind and composition of the explosive substance so that detonation velocity by the explosive substance blasted alone is higher than detonation velocity by the raw material substance blasted alone.

Use amounts of the aforementioned raw material substance and the aforementioned explosive substance may be adjusted individually and appropriately in accordance with a desired amount of carbon particles. Though not limited especially, the mass ratio of them (explosive substance/raw material substance) is preferably 0.1 or more, and more preferably 0.2 or more. In addition, the mass ratio is preferably 1 or less, more preferably 0.9 or less and still more preferably 0.8 or less. When the use amount proportion is made 0.1 or more, it is possible to promote the detonation reaction more largely so that the yield of the carbon particles can be further enhanced. On the contrary, when the use amount proportion is made 1 or less, the use amount of the explosive substance can be made appropriate so that the production cost of the carbon particles can be suppressed.

In this description, a proportion expressed by mass ratio, with which carbon particles can be recovered from carbon in a raw material substance, is referred to as "yield of carbon particles" which is a mass ratio of the carbon particles to the raw material substance. In addition, a proportion expressed by mass ratio, with which nanodiamond can be recovered from carbon in a raw material substance, is referred to as "yield of nanodiamond" which is a mass ratio of the nanodiamond to the raw material substance.

The method for producing the carbon particles has been described above.

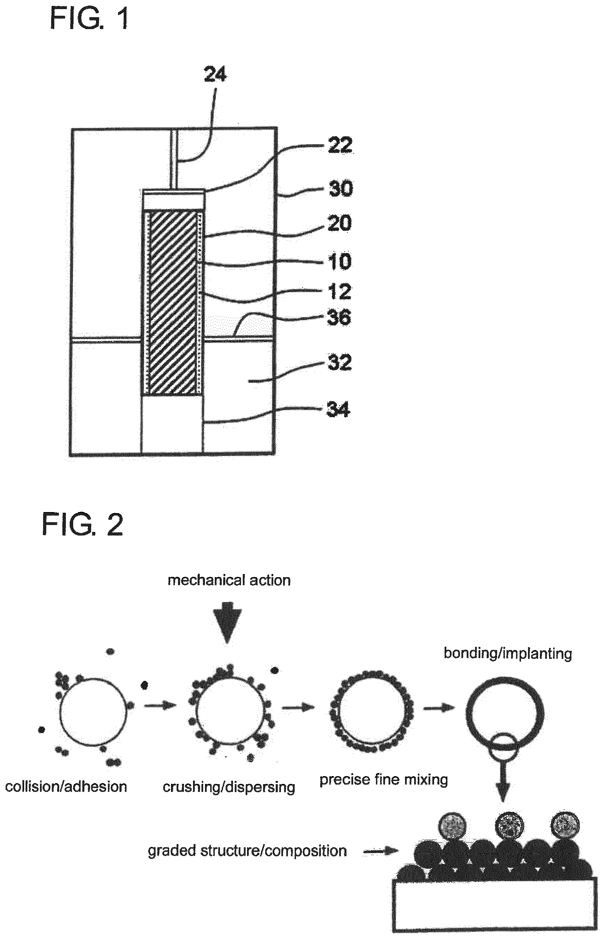

Next, a mode for carrying out the method for producing the carbon particles will be described more in detail with reference to the drawings. FIG. 1 is a sectional view schematically showing an example of an explosive device for use in the aforementioned production method. The explosive device shown in FIG. 1 is merely exemplary. It is not intended to limit the invention.

First of all, an explosive substance 12 is disposed in a periphery of a raw material substance 10. When the explosive substance 12 is disposed in the periphery of the raw material substance 10, it is preferred to symmetrically dispose the raw material substance 10 and the explosive substance 12 in such a manner that high temperature and high pressure associated with a shock wave generated by detonation of the explosive substance 12 are applied to the raw material substance 10 as uniformly as possible, namely, in such a manner that the symmetry of an explosion shape is guaranteed. Therefore, the following manner can be used in consideration of the fact that the raw material substance 10 is solid and the explosive substance 12 is a liquid high explosive. That is, the raw material substance 10 is melt-loaded or press-loaded to prepare a columnar molded body, and the molded body is placed in a center part of an inside of a cylindrical container while allowing axial directions thereof to agree with each other. Thereafter, the liquid high explosive is injected in the periphery thereof. Alternatively, after the liquid high explosive is injected into the cylindrical container, the molded body may be placed in the center part of the inside of the container while allowing axial directions thereof to agree with each other. The container housing the raw material substance 10 and the explosive substance 12 will be hereinafter referred to as an "explosion container". As the explosion container 20, it is preferred to use a container made of a synthetic resin such as an acrylic resin, because contamination with impurities such as metals can be prevented.

In the aforementioned production method, subsequently, the explosive substance 12 is detonated to form carbon particles from the raw material substance 10. The shock wave generated by the detonation reaction of the explosive substance 12 propagates towards the raw material substance 10, the raw material substance 10 is compressed by this shock wave to cause the detonation, and carbon atoms decomposed and liberated from organic molecules constituting the raw material substance 10 are changed to the carbon particles containing nanodiamond and nanographite.

The detonation may be performed in either an open system or a closed system. In order to perform the detonation in the open system, the detonation may be performed in, for example, an inside of an earthwork or a gallery provided by excavating the underground. The detonation in the closed system is preferably performed in a state where a chamber made of metal is filled with the raw material substance and the explosive substance. The state where a chamber made of metal is filled with the raw material substance and the explosive substance is, for example, a state where the molded body of the raw material substance and the explosive substance or the explosion container storing the raw material substance and the explosive substance is suspended in the chamber. It is preferred to perform the detonation in the closed system because a residue can be prevented from being scattered over a wide range.

The chamber used for performing the detonation will be hereinafter referred to as an "explosion chamber". The explosion chamber may be made of either metal or concrete as long as it has enough strength to endure the detonation.

In the case where the detonation is performed in the explosion chamber, when the atmosphere in the explosion chamber is substantially free from oxygen on the occasion of the detonation, an oxidation reaction of the carbon fraction can be inhibited. Therefore, the yield of the carbon particles can be improved. In order to obtain such an atmosphere, for example, a gas in the explosion chamber may be substituted with an inert gas such as a nitrogen gas, an argon gas or a carbon dioxide gas; the explosion chamber may be evacuated to about -0.1 to -0.01 MPaG (the symbol "G" attached after the pressure unit means that it is a gauge pressure; the same thing can be applied below); or after releasing the air (oxygen) from the explosion chamber by evacuation, such an inert gas may be injected into the explosion chamber to a weak positive pressure of about +0.000 to +0.001 MPaG.

Further, it is preferred to dispose a coolant around the raw material substance and the explosive substance in the explosion chamber. When the coolant is disposed, the formed nanodiamond can be quenched to prevent phase transition to nanographite. In order to dispose the coolant, for example, the aforementioned molded body or the explosion container 20 may be placed in a cooling container 30, and a coolant 32 may be charged into a gap between the cooling container 30 and the molded body or the explosion container 20. Here, when the coolant 32 is a substance which can substantially prevent generation of an oxidative substance such as oxygen or ozone, the oxidation reaction of the carbon fraction can be inhibited. Therefore, the yield of carbon particles is improved. In order to obtain the coolant 32 like this, for example, an oxygen gas dissolved in the coolant 32 may be removed, or the coolant 32 which does not contain a constituent element producing any oxidative substance such as oxygen or ozone may be used. Examples of such coolants 32 may include water, halogenated alkyls (such as chlorofluorocarbons and carbon tetrachloride), and the like. Water is especially preferred because it has substantially no adverse affection on the environment.

Although the explosive substance 12 is generally blasted by using a detonator or a detonating cord, in order to more surely cause the detonation, a booster 22 may be allowed to intervene between the explosive substance 12 and the detonator or the detonating cord. In this case, after the booster 22 and the detonator or the detonating cord 24 are attached to the molded body or the explosion container 20, they are, for example, loaded in the explosion chamber. Examples of such boosters 22 may include Composition C-4, SEP manufactured by Asahi Kasei Chemicals Corporation, and the like.

When the coolant 32 is used, it is preferred that the aforementioned molded body or the explosion container 20 is housed in a fluid-tight container (for example, a bag using an olefinic synthetic resin such as polyethylene or polypropylene as a raw material) so that, for example, the coolant 32 cannot penetrate into the explosion container 20. After setting up in this way, when the explosive substance 12 is blasted to perform the detonation, the carbon particles containing nanodiamond and nanographite are obtained as a residue thereof.

In the aforementioned production method, the residue obtained in the detonation step may possibly contain, as impurities, blasted wreckage such as a wreck of the container, a lead wire or a wire. In such a case, it is preferred to provide a step of removing the wreckage from the residue obtained in the detonation step to recover the carbon particles. In this step for recovering the carbon particles, for example, when classification/purification processing is performed, the carbon particles can be obtained in a form of dry powder having a desired particle size. Typically, first of all, after removing rough wreckage from the residue obtained in the detonation step, the resultant is classified with a sieve or the like and separated into a sieve-passing material and a residue on the sieve, and the sieve-passing material is recovered. The residue on the sieve may be crushed and then classified again. Water is separated from the finally obtained sieve-passing material to prepare a dry powder. Here, an opening of the sieve is properly adjusted, and the classification/purification processing is repeated. Then, the sieve-passing material of the sieve having an opening corresponding to a desired particle size may be obtained as a product. In more detail, for example, when the detonation is performed in the explosion chamber using water as the coolant 32, residue-containing water is recovered, followed by sedimentation separation. After removing rough wreckage, a supernatant is recovered as a waste fluid, and a precipitate is classified with a sieve or the like to obtain a sieve-passing material. A part of the formed carbon fraction may possibly attach to the wreckage. Therefore, a residue on the sieve is crushed and separated by means of ultrasonic vibration or the like and classified again with a sieve or the like. For example, a residue on a sieve having an opening of about 100 $\mu$m is mostly blasted wreckage such as a wreck of the explosion container 20, a lead wire or a wire. Therefore, such a residue on the sieve is disposed as an industrial waste after recovery. Of the particles passing through a sieve having an opening of about 100 $\mu$m, a residue on a sieve having an opening of about 32 $\mu$m may be crushed and separated by means of ultrasonic vibration or the like and classified again with a sieve or the like. It is preferred to recover the sieve-passing material of the sieve having the opening of about 32 $\mu$m as a final product through these operations. As for the recovered product, water is separated by means of centrifugation or the like, and then dried to obtain a powder of carbon particles having a desired particle size.

For example, when a container made of an acrylic resin is used as the explosion container 20, the residue obtained in the detonation step may possibly be contaminated with particles or powder of the acrylic resin. In this case, the acrylic resin may be removed by, for example, an elution treatment of the acrylic resin with acetone.

Further, in some application, contamination with a metal such as iron is sometimes undesirable. In such a case, for example, the metal such as iron may be removed by treatment with hot concentrated nitric acid.

The carbon particles obtained in the aforementioned production method contain nanodiamond and nanographite.

The carbon particles can be defined by the content proportion of a carbon fraction expressed by mass ratio. As described above, the raw material substance causes detonation, whereby the raw material substance is decomposed to an atomic level, and carbon atoms liberated therefrom without being oxidized aggregate in a solid state to form carbon particles. During the detonation, the raw material substance is in a high-temperature high-pressure state due to a decomposition reaction. However, the raw material substance is immediately expanded and cooled. This process from the high-temperature high-pressure state to the reduced-pressure and cooling state is caused within a very short time as compared with normal combustion or deflagration that is an explosion phenomenon slower than the detonation, and therefore, there is no time when the aggregated carbon grows largely. Thus, the nano-scale carbon particles are formed.

When a high explosive known to cause detonation is used as the raw material substance, pressure in the detonation becomes high enough to allow produced carbon particles to contain plenty of nanodiamond as expected easily from a thermodynamic equilibrium phase diagram of carbon. On the other hand, when a non-high explosive is used as the raw material substance, the pressure in the detonation is not high to synthesize nanodiamond. Thus, nano-scale carbon particles other than nanodiamond are produced. The carbon particles contain plenty of nanographite. Therefore, the content proportion between nanodiamond and nanographite can be controlled by pressure during detonation of a raw material substance.

In addition, it is important to select a raw material substance having a composition that does not oxidize the liberated carbon.

Further, it is preferable that an oxidative substance such as oxygen or ozone that can oxidize the liberated carbon to form gas such as CO or $CO_2$ is removed from a detonation system as much as possible.

From literatures (Satoshi Tomita et al,. "Diamond nanoparticles to carbon onions transformation: X-ray diffraction studies", Carbon 40, pp.1469-1474 (2002), Dilip K. Singh et al, "Diameter dependence of interwall separation and strain in multiwalled carbon nanotubes probed by X-ray diffraction and Raman scattering studies", Diamond & Related Materials 19, pp.1281-1288 (2010), etc.) and the results of X-ray diffraction of detonation nanodiamond acquired so far as described below, it may be estimated that a peak in which a diffraction angle $2\theta$ of the X-ray diffraction data measured by a Cu(K$\alpha$) tube is near 24 to 26° (hereinafter referred to as "peak near 26°") is originated from a nanocarbon substance composed mainly of a laminate sp2 carbon structure. In addition, with respect to (multilayer) carbon nanotubes of two layers, three layers or the like, a peak appears in this region.

In the X-ray diffraction, nanodiamond can be confirmed. However, as for the nano-scale carbon particles, it is not clear what kind of substance is contained other than nanographite and fine multilayer carbon nanotube providing the peak near 26°. Fine monolayer (single) carbon nanotubes or various fullerens do not take part in the peak near 26°. Therefore, their production amount is not included in the quantitative result based on the peak near 26°. Further, it can be, for example, estimated that nano-scale carbon particles whose laminated (graphite) structure has been changed to a turbostratic structure due to the detonation are also included in the peak near 26°. It cannot be denied that mixture of peaks of those deformed nano-scale carbon particles may act to expand the width of the peak near 26°. However, from TEM photographs, it has been proved that the production amount of fine monolayer (single) carbon nanotubes, various fullerens, etc. is small. That is, when carbon particles are produced by a detonation method, it is estimated that the production amount of nano-scale carbon particles that are not expressed by the peak near 26° can be set within a certain proportion range of a low mass ratio. It is therefore estimated that there is not provided a large error even when all the carbon other than diamond is regarded as graphite carbon. Further, it is estimated that carbon with another structure is rare.

From the aforementioned background, it is estimated that if kinds, amounts and configurations of a raw material substance and an explosive substance are determined in a specified production method, nanodiamond and nanographite produced by the production method can be set within a certain proportion range of a mass ratio. It is therefore estimated that there is not provided a large error even when all the carbon other than nanodiamond is regarded as nanographite. That is, it is estimated that carbon with another structure than nanodiamond and nanographite is rare. Thus, on the assumption that carbon other than nanodiamond is nanographite, the ratio between nanodiamond and nanographite may be obtained.

The aforementioned carbon particles contain nanodiamond and nanographite. It is, however, preferable that the carbon particles used in the invention has a comparatively high content proportion of nanodiamond. When G designates the mass of nanographite and D designates the mass of nanodiamond, it is preferable that the lower limit of the mass ratio G/D is as close to 0 as possible. That is, the mass ratio G/D is preferably over 0. The upper limit of the mass ratio G/D is not limited especially. The mass ratio G/D is preferably 10 or less, more preferably 8 or less, and still more preferably 6 or less. The mass ratio G/D is obtained by a method that will be described in the following Examples.

The coated particle according to the invention is characterized by a configuration in which the surface of the base material particle is coated with carbon particles obtained by the aforementioned production method. When the surface of the base material particle is coated with the aforementioned carbon particles, the coated particle can be used as a new raw material in various applications.

In the coated particle, it is preferable that the surface of the base material particle is coated with the carbon particles whose film thickness reaches 0.004 $\mu$m. That is, when the carbon particles are coated to be thinnest, it is recommended to set the film thickness at 0.004 $\mu$m. The film thickness may be 1 $\mu$m or more. The upper limit of the film thickness is not limited especially. For example, the film thickness is 10 $\mu$m or less.

The kind of the base material particle is not limited especially. Examples of the base material particle may include carbon, resin, glass, ceramics, metal, natural raw materials, etc. An example of carbon may include artificial graphite. Examples of resins may include acrylic, urethane, nylon, polyethylene, high molecular weight polyethylene, polytetrafluoroethylene, etc. Examples of glasses may include various amorphous glasses, crystallized glasses, etc. Examples of ceramics may include SiC, inactive alumina, silica, titania, zirconia, etc. Examples of metals may include aluminum, pure copper, bronze, brass, carbon steel, stainless streel, maraging steel, nickel-base alloys, etc. In addition, synthetic zeolite, natural raw materials such as wood chips, minerals, coals and rocks, etc. may be used.

The size of the base material particle is not limited especially. For example, the base material particle may have a size of about 2 to 550 $\mu$m.

Preferably the surface of the base material particle is perfectly covered and coated with the carbon particles. However, the invention is not limited thereto. The carbon particles may adhere to only parts of the surface of the base material particle.

The coated particle can be produced by a method including a step of disposing an explosive substance, which shows a liquid state at normal temperature and normal pressure, in a periphery of a raw material substance containing an aromatic compound having three or more nitro groups, a step of detonating the explosive substance to obtain carbon particles, and a step of coating surfaces of base material particles with the obtained carbon particles by a mechanical combination method.

The mechanical combination method means mixing or crushing. That is, due to a relation between functional expression of particles and energy applied thereto during mechanical powder processing, not only simple positional replacement (mixing) but also advanced functionality addition such as uniform dispersing, refining (crushing) and surface coating (combining) are attained on the particle side as the applied energy increases.

When a mechanical shearing/impacting action is applied to a mixture of powders whose particle sizes are largely different, particle surfaces become amorphous, and activities on the surfaces are enhanced. When there are different kinds of powders in one and the same system, composite particles whose surfaces are coated with fine particles having smaller particle sizes are produced due to interaction of the powders. The surface of each of particles (referred to as core particles or mother particles) serving as cores of the combination has a similarly regular structure. Therefore, this particle combination is also referred to as "regular mixing" or "precise fine mixing".

In a state where the mechanical energy is further higher, a solid-solid reaction or a mechanochemical reaction appears. That is, an interaction occurs on a scale corresponding to the applied energy, and an interaction on a molecular/atomic level appears in higher energy.

Generally, composite particles take the following two forms. One form is a coated composite particle in which a surface of a core particle is covered with a very small particle (child particle), and the other form is a distributed composite particle in which a child particle enters the inside of a core particle or the child particle and the core particle form a structure where they are entangled with each other. A capsular composite particle is of a core-shell type. What composite particles are produced depends on physical and chemical properties of core particles and child particles, and also depends on the magnitude of the mechanical action applied for the combination or the atmosphere.

As shown in FIG. 2, a process of mechanical combination includes (1) collision/adhesion of particles, (2) crushing/dispersing of the particles, (3) precise fine mixing of the particles, and (4) bonding/implanting of the particles. Those steps of the process are promoted by powerful impact, compression and shearing actions applied to the particles between a rotor or a ball rotating at a high speed and a container or an inner piece. Thus, the combination or the surface properties can be controlled.

Examples of combination apparatus may include a hybridization system (high-speed air flow impact method), a mechano-fusion system, and the like. Those combination apparatus have different mechanical actions respectively. For example, in the hybridization system, due to collision with a blade or a casing, very powerful impact is applied to particles so that different substances can be implanted or welded. In addition, the mechano-fusion system can be also expected to be applied to mechanical alloying because of actions of powerful compressing force and powerful shearing force. On the other hand, in some cases, such powerful mechanical actions may inhibit the functional expression in the composite particles. For example, deterioration in function or a change in crystal structure may be caused by sudden temperature rise or shock. Against such cases, it has also been developed a relatively mild approach. The approach is attained by a stirring mixer such as a Henschel mixer in which fine particles can be well dispersed by rotation of a stirring blade. It is convenient to the purpose of precise fine mixing in the particle surfaces. Further, there is another approach using a theta composer that can firmly fix a substance without changing a structure thereof, that is, can be expected to have a so-called intermediate mechanical action. Examples that will be described later use an "MP5 type mixer (compositor)" apparatus made by Nippon Coke & Engineering Co., Ltd., which is an improvement of the aforementioned Henschel mixer to have a function similar to the hybridization system. However, the coated particles according to the invention are not intended to be obtained only by the apparatus, but it can be obtained by the aforementioned various mechanical combination methods in the same manner.

In the invention, the carbon particles may be fluorinated before the surface of the base material particle is coated with the carbon particles. When the carbon particles are fluorinated in advance, functions of fluorine itself, such as water repellency, oil repellency, releasability, non-adhesiveness, antifouling property, chemical resistance, lubricity, antibacterial property, oxidizability, etc. can be given to the coated particle. In addition, the coated particle can be dispersed easily in both of water and an organic solvent.

As for the aforementioned fluorination, for example, a direct fluorination method for making the base material particles react with fluorine gas or a fluorinating agent derived from fluorine gas can be used. In addition, a method for fluorinating the base material particles due to reaction with fluorine plasma may be used. Further, a method for fluorinating the base material particles in a solution by a fluorinating agent such as a fluoroalkyl group containing oligomer may be used. Furthermore, fluorination with a fluorinating agent in an ionic liquid may be used.

Attention has been paid to graphite fluoride as a new industrial material due to its chemical and physical properties. Graphite fluoride is a white powder-like inorganic sheet polymer produced by direct reaction between carbon and fluorine. Although graphite fluoride is apt to be identified with fluorocarbon such as $CF_4$, $C_2F_6$ or ${CF_2-CF_2}_n$, graphite fluoride is characterized in that graphite fluoride produced from graphite becomes crystalline; graphite fluoride is a solid polymer that cannot be synthesized by means of polycondensation or the like; and so on. Therefore, it is referred to as graphite fluoride in distinction from general compounds of carbon and fluorine. Such carbon materials form a system to be dealt with as substances in a boundary region between organic chemistry and inorganic chemistry because of their production histories and so on.

It has been heretofore considered that graphite fluoride produced from various carbon raw materials such as amorphous carbon, carbon black, petroleum coke, graphite, etc. can be expressed by $(CF)_n$. However, graphite fluoride according to the invention is characterized in that a C-F bond is most popular, but a $C-F_2$ bond and a $C-F_3$ bond are also recognized, as will be described later.

The aforementioned coated particle contains nanographite and nanodiamond in the surface of the base material particle. Therefore, using excellent properties of nanodiamond such as grindability, durability, wear resistance, etc., the coated particles are useful for application as a wear resistant agent, a lubricant, etc. In addition, using excellent properties of nanographite such as electric conductivity, water repellency, biocompatibility, etc., the coated particles are useful for application as a fibrous material, a resin coating for providing functionality, a drug delivery system, an electronic device cover, an electrode material for a battery, a conductive film, a reinforced rubber/water-repellent rubber, a catalyst, an adsorption material, etc.

The invention also includes a functional material in which the aforementioned coated particles are supported on a surface of a substrate material. When the coated particles are supported, the following effects can be obtained. That is, in accordance with the kind of the substrate material supporting the coated particles, the surface hardness of the substrate material can be increased; the friction coefficient can be lowered to improve lubricity; the wear resistance can be improved; the catalytic property (reaction activity) can be improved; the electric conductivity can be improved; the thermal conductivity can be improved; the anticorrosion property can be improved; or if the coated particles are fluorinated, the water repellency, the oil repellency, the releasability, the non-adhesiveness, the antifouling property, the chemical resistance, the lubricity, the antibacterial property or the oxidizability can be improved.

The kind of the substrate material supporting the coated particles is not limited especially. Examples of such substrate materials may include carbon, wood, glass, resin, ceramics, metal, concrete, exterior wall materials, etc.

Examples of such carbons may include graphite, glassy carbon, artificial graphite, isotropic graphite, carbon black, fine carbon, C/C composite (carbon fiber reinforced carbon composite), carbon fiber, etc.

Examples of such glasses may include PYREX (registered trademark) glass, amorphous glass such as quartz glass, crystallized glass such as lithium aluminosilicate glass or magnesium aluminosilicate glass, special glass such as conductive glass, etc.

Examples of such resins may include thermoplastic resin, thermosetting resin, nylon, engineering plastic, etc. Examples of such thermoplastic resins may include polyethylene, polypropylene, polyvinylchloride, polystyrene, polyvinyl acetate, polyurethane, polytetrafluoroethylene, ABS resin, acrylic resin, polycarbonate, etc. Examples of such thermosetting resins may include phenolic resin, epoxy resin, polyester resin, etc. Examples of such engineering plastics may include polyacetal, bakelite, epoxy glass, ultra-high molecular weight polyethylene, polyamide, modified polyphenylene ether, polyethylene terephthalate, polybutylene terephthalate, polyphenylene sulfide, polyarylate, polyamideimide, polyether imide, polyether ketone, polyether ether ketone, polysulfone, polyether sulfone, fluoropolymer, etc.

Examples of such ceramics may include oxide ceramics such as alumina, silica and quartz, carbide ceramics such as silicon carbide, nitride ceramics such as silicon nitride and aluminum nitride, titania, zirconia, etc.

Examples of such metals may include iron-based metals such as ordinary steel, tool steel, bearing steel, stainless steel, iron and cast iron, nonferrous metals such as copper, copper alloys, aluminum, aluminum alloys, nickel, nickel-based alloys, tin, lead, cobalt, titanium, chromium, gold, silver, platinum, palladium, magnesium, manganese and zinc, etc. Further, alloys of those metals may be used, or oxides of the metals may be also used.

The shape of the substrate material is not limited especially. Examples of such shapes may include a sheet-like shape, a columnar shape, a cylindrical shape, etc.

Next, a production method of the functional material will be described. The functional material can be produced by supporting the coated particles on the surface of the substrate material.

As a method for supporting the coated particles on the surface of the substrate material, for example, (1) thermal spraying, (2) rolling, or (3) plating can be used. (1) Thermal spraying and (2) rolling can be collectively referred to as a thermomechanical processing method.

Further, a particle collision method using a mechanism in which heat is generated by high-speed collision of fine particles (also referred to as WPC (Wide Peening Cleaning) by some people) may be used.

(1) Thermal Spraying

The functional material supporting the coated particles on the surface of the substrate material can be produced by thermally spraying the coated particles against the substrate material.

A thermal spraying method is a kind of surface modification technique in which a material to be thermally sprayed, such as metal or ceramics, is heated to a molten or semi-molten state by use of combustion flame, electric energy or the like, and material particles obtained thus are sprayed against a surface of a substrate material so as to form a coating on the surface of the substrate material. Combustion gas, plasma or the like is used as a heat source for melting the material to be thermally sprayed such as powder or a wire. The molten material is formed into fine particles each having a diameter of several $\mu$m to one hundred and several tens of $\mu$m. The fine particles collide with the surface of the substrate material at a high speed of several tens of m/sec to several hundreds of m/sec. Thus, a coating is formed by lamination of flat fine particles solidified rapidly ($10^7$ °C/sec or higher in a case of liquefied metal particles). This lamination structure is a conspicuous feature of a thermally sprayed coating, and it is also referred to as lamellar structure. This structure has been used for applications as follows. That is, materials to be thermally sprayed are sprayed against surfaces of members in various instruments or devices to add thereto functions and qualities including wear resistance, corrosion resistance, thermal insulation, electric conductivity, etc. separately from raw materials of the members. There are a large number of methods and processes for thermal spraying.

The thermal spraying method is not limited especially. Examples of such methods may include flame spraying, arc spraying, plasma spraying, detonation spraying, high speed flame spraying, cold spraying, etc. The flame spraying, the arc spraying and the plasma spraying are known as temperature-based spraying methods in which particles melted satisfactorily are sprayed at a low speed. On the other hand, the detonation spraying, the high speed flame spraying and the cold spraying are known as speed-based spraying methods in which semi-molten particles are sprayed at a high speed. Of them, the cold spraying is one of surface coating techniques based on high-speed fine particle collision, which is conspicuously characterized in that particles are accelerated by low-temperature and high-speed working gas. Since the temperature of the gas is lower than the melting point of material particles, the material particles are not melted. Therefore, in recent years, the cold spraying has been also used for thermally spraying nanocarbon materials such as carbon nanotubes. However, nano-sized carbon particles forming a part of coated particles are obtained by a detonation method in the invention. The carbon particles are exposed to a high temperature of 800°C or higher when the carbon particles are produced. It is therefore estimated that the carbon particles have higher heat resistance than any other nanocarbon material such as carbon nanotube. Thus, when metal or ceramic that is a heat-resistant material is selected for the base material particles, the coated particles can be dealt with even in a temperature-based spraying method. It can be considered that it is not necessary to limit the thermal spraying method to a speed-based spraying method.

It can be considered that when the coated particles according to the invention are subjected to thermal spraying by various methods, wear resistance, slidability, electric conductivity (in a case where the substrate material is ceramic or resin), etc. can be improved by the carbon particles existing in the thermally sprayed coating. Further, more functions can be expected when the carbon particles in the thermally sprayed coating are regarded as a catalyst or a carrier, or a filler serving as a binder. That is, when the carbon particles supported in the coated particles are changed to graphite fluoride by the aforementioned fluorination, functions such as water repellency, oil repellency, releasability, non-adhesiveness, antifouling property, chemical resistance, lubricity, antibacterial property, oxidizability, etc. can be given to the coated particles. When the carbon particles in the thermally sprayed coated particles are fluorinated in the same manner, functions of graphite fluoride can be given to the thermally sprayed surface of the substrate material in the same manner as the fluorinated coated particles. That is, when the thermally sprayed surface of the substrate surface is fluorinated, functions such as water repellency, oil repellency, releasability, non-adhesiveness, antifouling property, chemical resistance, lubricity, antibacterial property, oxidizability, etc. can be given to the surface of the substrate material.

(2) Rolling

When the coated particles are rolled on the substrate material, a functional material supporting the coated particles in its surface can be produced.

The rolling method is not limited especially. Examples of such methods may include a press rolling method such as a roll press method or a belt press method, a forging method such as a batch-type flat hot press method, a clad rolling method, etc.

The rolling is not limited to a method in which only the coated particles are shaped, but a method in which the coated particles and a binder agent are mixed and supplied may be used. When a combination of materials for the base material particles and the substrate material is selected, the coated particles can be supported on the surface of the substrate material without any adhesive. For example, metal, ceramic or the like with a high melting point is selected for the base material particles, and resin or the like with a low melting point is selected for the substrate material. When hot pressing is performed at a heating temperature slightly higher than the melting point of the lower melting side, the coated particles can be welded to the substrate material. On the contrary, resin or the like with a low melting point may be selected for the base material particles and metal, ceramic or the like with a high melting point may be selected for the substrate material. When hot pressing is performed at a heating temperature slightly higher than the melting point of the lower melting side in the same manner, the base material particles of the coated particles are melted and spread onto the surface of the substrate material. After being cooled, a layered base material coating including the carbon particles can be formed in the surface of the substrate material. Alternatively, alumina, SiC, stainless steel, maraging steel, tool steel or the like with high hardness may be selected for the base material particles, and one of various resins, aluminum, copper or the like with low hardness may be selected for the substrate material. In this case, the coated particles can be supported on the surface of the substrate material even by rolling at a low heating temperature.

In a combination of aluminum powder and boron powder difficult to be dissolved uniformly in an example in which the coated particles are mixed with a binder agent and subjected to clad rolling, extrusion, or the like, a clad rolled sheet to which aluminum is welded in a high compacted state can be obtained by a method in which a powder mixture of boride powder and aluminum alloy powder is directly extruded, a method in which a preformed body of the powder mixture preformed into a predetermined shape is extruded, forged or rolled, or a method in which the powder mixture or the preformed body is enclosed by a metal container having a predetermined shape, and extruded, forged or rolled. On the other hand, the binder agent in the invention is not limited to aluminum or aluminum alloy power. Thermosetting resin or reactive hot melt adhesive, which is often used for producing plywood (veneer), may be used. Thus, it can be considered that when the coated particles according to the invention is rolled by various methods, wear resistance, slidability, electric conductivity (in a case where the substrate material is ceramic or resin), etc. can be improved by the carbon particles existing in the thermally sprayed coating.

Further, more functions can be expected when the carbon particles are regarded as a catalyst or a carrier, or a filler serving as a binder.

As the coated particles, as described above, coated particles in which the surfaces of the base material particles are coated with the fluorinated carbon particles may be used. Alternatively, coated particles in which the surfaces of the base material particles are coated with the carbon particles that have not been fluorinated yet may be prepared, and fluorination may be performed on the coated particles which have been supported on the surface of the substrate material.

(3) Plating

When the substrate material is immersed and plated in a plating bath in which the coated particles have been dispersed, a functional material in which the coated particles are supported on the surface of the substrate material can be produced.

The plating method is not limited especially. For example, either electroplating or electroless (chemical) plating may be used. The kind of metal to be plated may be a single metal (such as copper, nickel, chromium, tin, zinc, silver, gold, etc.) or an alloy (such as brass, bronze, solder, Zn-Ni alloy, Zn-Fe alloy, Ni-P, Ni-B, Ni-W, Ni-Fe, etc.), serving as a composite plating method in which fine particles including the coated particles are deposited on the plated metal.

The plating bath is not limited especially as long as the coated particles have been dispersed in the plating bath. For example, it is possible to use a commercially available plating bath in which the coated particles have been dispersed.

The kind of plating bath is not limited especially. Examples of such plating baths may include an Ni plating bath, an Ni-P plating bath, an Ni-B plating bath, an Ni-W plating bath, an Ni-Cu-P plating bath, an Ni-S plating bath, a Cr-W plating bath, a Cr-Mo plating bath, a Cr-Fe plating bath, a Cr-C plating bath, a Cr-H plating bath, an Fe-W plating bath, an Fe-Mo plating bath, an Fe-Ni plating bath, a Co-W-based plating bath, a nickel sulfamate plating bath, a copper cyanide plating bath, a copper pyrophosphate plating bath, a copper sulfate plating bath, a hexavalent chromium plating bath, a zinc cyanide plating bath, a cyanide-free zinc plating bath, an alkaline tin plating bath, an acidic tin plating bath, a silver plating bath, a gold cyanide plating bath, an acidic gold plating bath, etc. Further, examples of such Ni plating baths may include a Watts bath, a sulfamic acid bath, a strike bath (Woods bath), a black nickel plating bath, etc.

The temperature of the plating bath during the plating is not limited especially. For example, it may be set at 50 to 90°C. Further, a plating solution may be stirred during the plating.

Examples

The present invention will be described below along its examples more specifically. However, the invention is not intended to be restricted by the following examples, but can be carried out with changes made thereon within a scope adaptable to the spirit of the invention which has been described above and which will be described below. Any of those changes is also encompassed in the technical scope of the invention.

The surface of the base material particle is coated with the carbon particles produced in procedures described in the following Experimental Examples 1 to 3, so as to produce the coated particle.

<<Experimental Example 1 (3#2)>>

In this experimental example, carbon particles were produced by a detonation method using TNT as a raw material substance and using a hydrazine-based liquid high explosive as an explosive substance. Specifically, a columnar molded body (columnar TNT-filled body having a diameter of 10 cm and a length of 20 cm, manufactured by Chugoku Kayaku Co., Ltd.) available in the market was used as TNT. The TNT-filled body had a mass of 2.52 kg, and a density of 1.60 g/cm$^3$. In addition, hydrazine nitrate and hydrazine hydrate were mixed at a mass ratio of 3:1 to prepare 0.93 kg of a hydrazine-based liquid high explosive.

Subsequently, a detonation reaction was performed by using the explosive device as illustrated in FIG. 1. The aforementioned molded body as the raw material substance 10 was placed in the center part of the explosion container 20 having an inside diameter of 12 cm and a height of 20 cm, and the aforementioned liquid high explosive as the explosive substance 12 was filled in the periphery thereof. The booster 22 (SEP), the detonating cord and the No. 6 electric detonator 24 were installed in a top of the explosion container 20, which is covered with a lid, and then housed in a fluid-tight polyethylene bag. A container having a capacity of 200 L was used as the cooling container 30. The explosion container 20 was placed in the cooling container 30. Here, an outer bottom surface of the explosion container 20 was adjusted so as to be positioned at a height of 29.5 cm from an inner bottom surface of the cooling container 30, using an iron-made stand 34 and an iron-made perforated disk 36. Then, distilled water was poured as the coolant 32 in the cooling container 30 so that a gap between the cooling container 30 and the explosion container 20 could be filled with the coolant 32. Further, the polyethylene bag filled with distilled water was placed on an upper portion of the cooling container 30. Totally 200 L of distilled water was used. After being covered with a lid, the cooling container 30 was suspended in an explosion chamber having an internal volume of 30 m$^3$ from a ceiling thereof by using a wire sling. An inside of the aforementioned explosion chamber was evacuated from the atmospheric pressure to adjust the amount of a residual oxygen gas in the explosion chamber to about 25.5 g as calculated value.

After setting up in this way, the aforementioned detonating cord was blasted by the aforementioned detonator, thereby detonating the explosive substance 12. Then, about 200 L of water containing a residue was recovered from the inside of the aforementioned explosion chamber, and rough wreckage was removed by sedimentation separation. Here, since a supernatant was strongly alkaline, citric acid was added thereto to make the pH thereof weakly acidic. The supernatant made weakly acidic was recovered as a waste fluid as it was. A precipitate was classified with sieves having an opening of 100 $\mu$m and an opening of 32 $\mu$m respectively, using a vibration sieve device ("KG-700-2W" manufactured by Kowa Kogyosho Co., Ltd.). A 32 $\mu$m-sieve-passing material was recovered as it was.

Of a 100$\mu$m-sieve-passing material, a residue on a sieve having an opening of 16 $\mu$m was crushed for about 5 minutes by an ultrasonic vibration device ("4G-250-3-TSA" manufactured by Crest). A carbon fraction was separated from a wreckage surface and thereafter classified again with sieves having an opening of 100 $\mu$m, an opening of 32 $\mu$m and an opening of 16 $\mu$m respectively, using the vibration sieve device ("KG-700-2W" manufactured by Kowa Kogyosho Co., Ltd.). Sieve-passing materials were recovered. Each of the sieve-passing materials was allowed to stand in a drying machine ("OF-450S" manufactured by As One Corporation) at 80°C for 24 hours to evaporate moisture, thereby preparing a dry powder.

Thus, there was obtained 492.5 g in total of carbon particles including 104.5 g of a 16 $\mu$m-sieve-passing material, 243.9 g of a 32 $\mu$m-sieve-passing material and 144.1 g of a 100 $\mu$m-sieve-passing material. The experiment contents, the recovery amount and yield of the carbon particles, and the total recovery amount of diamond obtained by the following XRD quantitative method in this experimental example are shown in the following Table 1.

<<Experimental Example 2 (3#4)>>

In this experimental example, carbon particles were produced on the same conditions as in the aforementioned Experimental Example 1, except that a TNT molded body (columnar TNT-filled body having a diameter of 10 cm and a length of 30 cm, manufactured by Chugoku Kayaku Co., Ltd.) having a mass of 3.82 kg and a density of 1.61 g/cm$^3$ was used as the raw material substance in place of the TNT molded body having a mass of 2.52 kg and a density of 1.60 g/cm$^3$, and the use amount of the hydrazine-based liquid high explosive as the explosive substance was changed from 0.93 kg to 1.29 kg.

As a result, there was obtained carbon particles including 192.1 g of a 16 $\mu$m-sieve-passing material, 356.5 g of a 32 $\mu$m-sieve-passing material and 222.2 g of a 100 $\mu$m-sieve-passing material. The total recovery amount of the carbon particles was 770.8 g.

The experiment contents, the recovery amount and yield of the carbon particles, and the total recovery amount of diamond obtained by the following XRD quantitative method in this experimental example are shown in the following Table 1.

<<Experimental Example 3 (3#5)>>

In this experimental example, carbon particles were produced on the same conditions as in the aforementioned Experimental Example 1, except that a TNT molded body (columnar TNT-filled body having a diameter of 10 cm and a length of 50 cm, manufactured by Chugoku Kayaku Co., Ltd.) having a mass of 6.30 kg and a density of 1.59 g/cm$^3$ was used as the raw material substance in place of the TNT molded body having a mass of 2.52 kg and a density of 1.60 g/cm$^3$, the use amount of the hydrazine-based liquid high explosive as the explosive substance was changed from 0.93 kg to 2.17 kg, and the use amount of distilled water as the coolant was changed from 200 L to 220 L.

As a result, there was obtained carbon particles including 257.4 g of a 16 $\mu$m-sieve-passing material, 531.8 g of a 32 $\mu$m-sieve-passing material and 336.4 g of a 100 $\mu$m-sieve-passing material. The total recovery amount of the carbon particles was 1,125.6 g.

The experiment contents, the recovery amount and yield of the carbon particles, and the total recovery amount of diamond obtained by the following XRD quantitative method in this experimental example are shown in the following Table 1.

Next, the carbon particles obtained in Experimental Examples 1 to 3 were observed by a transmission electron microscope (TEM) in the following procedure.

<TEM Observation>

The obtained carbon particles were observed using a TEM having a CCD camera and a photographing magnification and capable of observing lattice images of diamond and graphite carbon having a lamination structure. Specific measurement conditions of the TEM will be shown below.

device name of TEM: transmission electron microscope, JEM-ARM200F, manufactured by JEOL Ltd.
measurement method: suspension method, dispersion solvent: methanol
accelerating voltage: 200 kV
CCD camera: UltraScan, manufactured by Gatan
photographing magnification: 300,000 times and 800,000 times
imaging magnification: 2,200,000 times, and 5,900,000 times when printed in A4 size

From the results of measurement using the TEM, it was observed that the carbon particles obtained by the production method of the invention were formed out of nanodiamond and nanographite. Detailed description will be made below.

First, description will be made about the observation results of the carbon particles obtained in Experimental Example 3 (3#5) at a low magnification.

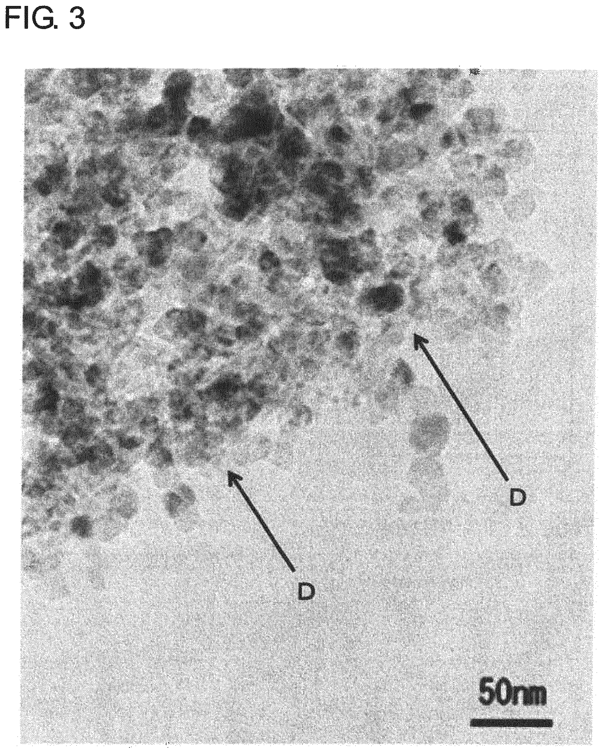

FIG 3 is a drawing substitute photograph in which the carbon particles obtained in Experimental Example 3 (3#5) were taken. The imaging magnification corresponds to 320,000 times when FIG. 3 is printed in landscape A4 size. In FIG. 3, a part represented by the sign D designates nanodiamond.

From the photograph of FIG. 3, it is understood that when the carbon particles obtained in Experimental Example 3 (3#5) were taken at the low magnification, they were chiefly formed out of nanodiamond, and few nanographite was observed.

Next, description will be made about the observation results of the carbon particles obtained in Experimental Example 3 (3#5) at a high magnification.

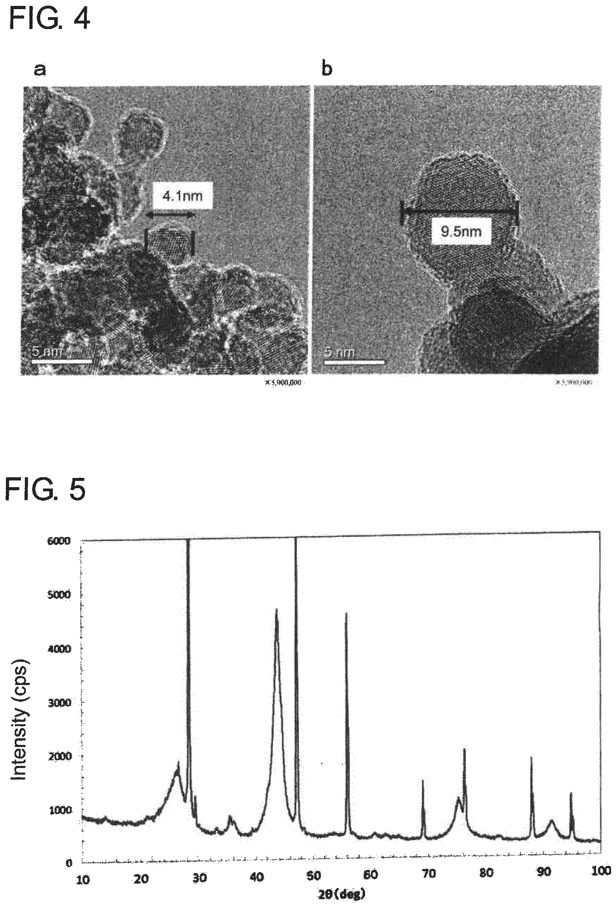

Among the carbon particles obtained in Experimental Example 3 (3#5), transmission electron microscopic (TEM) photographs of the 16 $\mu$m-sieve-passing material are shown in FIG. 4.

Among the drawing substitute photographs shown in FIG. 4, in a photograph a, a carbon particle having a round shape and found among the carbon particles was enlarged and imaged with an imaging magnification corresponding to 5,900,000 times. From the photograph a, it can be confirmed that the particle diameter of the carbon particle having the round shape is about 4.1 nm. Also in a photograph b, a carbon particle having a round shape and found among the carbon particles was enlarged with an imaging magnification corresponding to 5,900,000 times in the same manner as in the aforementioned photograph a. From the photograph b, it can be confirmed that the particle diameter of the carbon particle having the round shape is about 9.5 nm. As described above, the round-shaped carbon particles observed in the photographs a and b can be regarded as nanodiamond.

Next, X-ray diffraction (XRD) of the obtained carbon particles was measured and evaluated.

<XRD Quantitative Method>

Among the carbon particles obtained in Experimental Example 3 (3#5), the XRD of the 100 $\mu$m-sieve-passing material was measured. A chart thereof is shown in FIG. 5. Measuring conditions of the X-ray diffraction are shown below.

device name of X-ray diffraction device: Horizontal X-ray diffraction device, SmartLab, manufactured by Rigaku Corporation
measurement method: $\theta$-$2\theta$
X-ray source: Cu-K$\alpha$ ray
excitation voltage-current: 45 kV-200 mA
divergence slit: 2/3°
scattering slit: 2/3°
receiving slit: 0.6 mm

Next, among the carbon particles obtained in Experimental Examples 1 to 3, XRD of the carbon particles in the 16 $\mu$m-sieve-passing material was measured. From the measurement result, integrated intensity was obtained about a diffraction peak appearing near $2\theta$=75° in the D220 surface of nanodiamond, and the proportion of nanodiamond contained in the carbon particles was obtained using each calibration curve prepared in advance.

As a standard substance for determining the quantity of nanodiamond, nanodiamond was used which had been purified by removing nanographite and the like with perchloric acid from nanodiamond-containing carbon particles sep-

aratedly produced in the present invention. A silicon powder (Stansil-G03A manufactured by Osaka Yakken Co. Ltd., D50=5.2 μm) of 10 mass% to the total carbon amount was added as an internal standard.

The calibration curve for nanodiamond was prepared using 5 standard samples by performing 4-point measurement from the ratio of the integrated intensity of the aforementioned diffraction peak and the integrated intensity of the diffraction peak on each of the Si 220 plane and the Si 311 plane of a silicon crystal added to each of the samples. Use of the two peaks of the silicon crystal is to suppress the influence of orientation of the powdered silicon. The 5 standard samples were prepared by mixing silicon crystals with the nanodiamond so as to provide 0 mass%, 25 mass%, 50 mass%, 75 mass% and 100 mass% as content proportions of nanodiamond respectively.

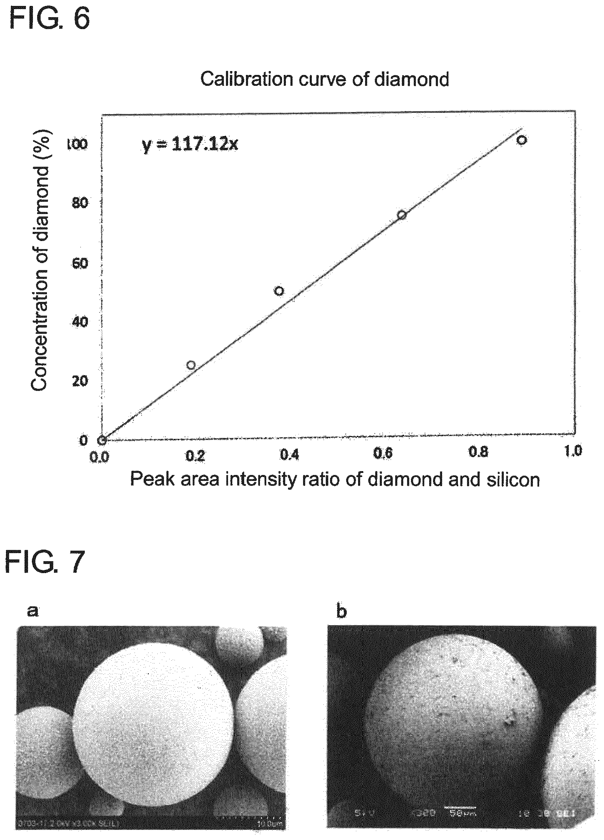

The calibration curve for nanodiamond was obtained by plotting with the concentration of nanodiamond on the ordinate and with the peak area intensity ratio D220/(Si220+Si311) of nanodiamond and silicon on the abscissa. A relational expression between the concentration Y of nanodiamond and the intensity ratio X was Y=117.12XX, according to linear approximation by a least squares method. The obtained calibration curve is shown in FIG. 6.

In addition, the area intensity ratio of the diffraction peak was obtained from the measurement results of the X-ray diffraction (XRD), and the content proportion of nanodiamond to the carbon particles was obtained using the calibration curve shown in FIG. 6. The total recovery amount of the carbon particles was multiplied by the obtained nanodiamond content proportion to calculate the total recovery amount of nanodiamond. It was found that the carbon particles obtained in the aforementioned production method had nanodiamond and nanographite carbon as their major components. No carbon fraction having another structure could be observed substantially.

The content proportion of nanodiamond (D: when the carbon particles were regarded as 100 mass%) was obtained in the carbon particles obtained in each of Experimental Examples 1 to 3. Of the carbon particles, other parts than nanodiamond were estimated as nanographite, and the content proportion (G) of nanographite was calculated. The mass ratio G/D was calculated based on the content proportion (D) of nanodiamond contained in the carbon particles and the content proportion (G) of nanographite contained in the carbon particles. The results of Experimental Examples 1 to 3 are also shown in the aforementioned Table 1.

From Table 1, it is understood that carbon particles containing nanodiamond and nanographite can be produced by the detonation method when TNT which is a low explosive raw material is used as the raw material substance and when liquid high explosive is used as the explosive substance. In addition, the obtained carbon particles had a high content proportion of nanodiamond. In fact, the yield of nanodiamond was 9.2 to 11.3%, which was a high value. On the other hand, Table 2 of the aforementioned Non-Patent Literature 1 shows that the yield of diamond in a background-art method is 2.8% when TNT is used alone, 4.1 to 8.3% when TNT and RDX are used together, and 3.75 to 8.2% when TNT and HMX are used together. It is therefore understood that, according to the aforementioned production method using the low explosive raw material and the liquid high explosive together, carbon particles having a higher content of nanodiamond can be produced than in the background-art method using a low explosive raw material alone or together with a solid high explosive.

[Table 1]

| | | Experimental Example 1 (3#2) | Experiment al Example 2 (3#4) | Experimental Example 3 (3#5) |
|---|---|---|---|---|
| raw material substance | kind | TNT | TNT | TNT |
| | mass (kg) | 2.52 | 3.82 | 6.3 |
| | volume ($cm^3$) | 1580 | 2380 | 3960 |
| | density ($g/cm^3$) | 1.60 | 1.61 | 1.59 |
| explosive substance | kind | NH+HH[1] | NH+HH[1] | NH+HH[1] |
| | mass (kg) | 0.93 | 1.29 | 2.17 |
| cooling container | volume (L) | 200 | 200 | 200 |
| coolant | volume (L) | 200 | 200 | 220 |
| explosion chamber | internal volume ($m^3$) | 30 | 30 | 30 |
| | residual oxygen gas amount (g) | 25.5 | 25.5 | 25.5 |
| carbon particles | 16$\mu$m-sieve-passing material (g) | 104.5 | 192.1 | 257.4 |
| | 32$\mu$m-sieve-passing material (g) | 243.9 | 356.5 | 531.8 |
| | 100$\mu$m-sieve-passing material (g) | 144.1 | 222.2 | 336.4 |
| | total recovery amount (g) | 492.5 | 770.8 | 1125.6 |
| | yield (mass %)[2] | 19.5 | 20.2 | 17.9 |
| diamond | total recovery amount (g) | 231.1 | 432 | 616.5 |
| | yield (mass %)[3] | 9.2 | 11.3 | 9.8 |
| diamond (D) | content proportion (mass %) | 46.9 | 56 | 54.8 |
| graphite carbon (G) | content proportion (mass %) | 53.1 | 44 | 45.2 |

(continued)

| | | Experimental Example 1 (3#2) | Experiment al Example 2 (3#4) | Experimental Example 3 (3#5) |
|---|---|---|---|---|
| mass ratio | G/D | 1.13 | 0.78 | 0.82 |

[1] hydrazine-based liquid high explosive obtained by mixing hydrazine nitrate ($H_2N-NH_2 \cdot HNO_3$) and hydrazine hydrate ($H_2N-NH_2 \cdot H_2O$) are mixed at a mass ratio of 3:1

[2]
$$\text{yield (\%)} = 100 \times (\text{total recovery amount (g) of carbon particles/[mass (kg) of raw material substance} \times 1000])$$

[3]
$$\text{yield (\%)} = 100 \times (\text{total recovery amount (g) of diamond/[mass (kg) of raw material substance} \times 1000])$$

For the carbon particles obtained in each of the aforementioned Experimental Examples 1 to 3, the value of G/(G+D) was calculated based on the content proportion (D) of nanodiamond contained in the carbon particles and the content proportion (G) of nanographite contained in the carbon particles. The calculation result is shown in the following Table 2 together with the aforementioned mass ratio G/D. In addition, the following Table 2 shows values of G/D and G/(G+D) in commercial products available as nanodiamond on the market.

The carbon particles obtained in the aforementioned Experimental Examples 1 to 3 were observed by a transmission electron microscope. It was found that the boundary of primary particles having a particle size of 4 to 10 nm could be distinguished clearly as a white thin boundary layer, as compared with each commercially available product. It was estimated that this boundary layer was not of nanographite (G). Although it is estimated that nanographite (G) is present in a boundary layer of nanodiamond in the commercial product, coexistent nanographite (G) was not coating or coexistent near the surface of nanodiamond (D) but existed separately from the nanodiamond (D) in the carbon particles obtained in the aforementioned Experimental Examples 1 to 3.

[Table 2]

| | | mass ratio | |
|---|---|---|---|
| | | G/D | G/(G+D) |
| Experimental Example 1 (3#2) | | 1.13 | 0.53 |
| Experimental Example 2 (3#4) | | 0.78 | 0.44 |
| Experimental Example 3 (3#5) | | 0.82 | 0.45 |
| commercial product[1] (reference) | NUAC | 2.03 | 0.67 |
| | ND62 | <0.01 | <0.01 |
| | NanoAmand® | <0.01 | <0.01 |
| | BD | 0.16 | 0.14 |
| | UDD | 0.03 | 0.03 |
| [1] NUAC and ND62 made in China, NanoAmand made in Japan, BD and UDD made in Russia/Ukraine | | | |

Next, the surfaces of base material particles were coated with the carbon particles obtained in the aforementioned Experimental Example 2 (3#4) or Experimental Example 3 (3#5).

As the base material particles, (a) urethane resin particles, (b) acrylic resin particles, (c) high molecular weight polyethylene resin particles, (d) PTFE particles, (e) SiC particles, (f) inactive alumina particles, (g) SUS316L stainless steel particles, (h) copper particles, (i) bronze particles, (j) aluminum partciles, and (k) maraging steel particles were used. Specific description will be made below.

(a) "C-300" (average particle size $\varphi$22 $\mu$m, specific gravity 1.16 g/cm$^3$) manufactured by Negami Chemical Industrial Co., Ltd. was used as the aforementioned urethane resin particles.

(b) "SE-010T" (average particle size $\varphi$22 $\mu$m, specific gravity 1.21 g/cm$^3$) manufactured by Negami Chemical Industrial Co., Ltd., "TAFTIC AR650M" (average particle size $\varphi$30 $\mu$m, specific gravity 1.35 g/cm$^3$) manufactured by Toyobo Co., Ltd., or "J-4PY" (average particle size $\varphi$2.2 $\mu$m, specific gravity 1.21 g/cm$^3$) manufactured by Negami Chemical Industrial Co., Ltd. was used as the aforementioned acrylic resin particles.

(c) "MIPELON PM-200" (average particle size $\varphi$10 $\mu$m, specific gravity 0.94 g/cm$^3$) manufactured by Mitsui Chemicals Co. Ltd. was used as the aforementioned high molecular weight polyethylene resin particles.

(d) "Lubricating Powder for Dispersed Liquid" (average particle size $\varphi$0.3 $\mu$m, specific gravity unknown) manufactured by Nagoya Gosei Co., Ltd. was used as the aforementioned PTFE particles.

(e) "SSC-A15" (average particle size $\varphi$18.6 $\mu$m, specific gravity 1.91 g/cm$^3$) manufactured by Shinano Electric Refining Co., Ltd. was used as the aforementioned SiC particles.

(f) "VERSAL-G series VGL-25" (average particle size $\varphi$15 $\mu$m, specific gravity 1.93 g/cm$^3$) manufactured by Union Showa K.K., "DAW-03" (average particle size $\varphi$4.3 $\mu$m, specific surface area 0.5 m$^2$g) manufactured by Denka Company Limited, "ASFP-20" (average particle size $\varphi$0.27 $\mu$m, specific surface area 12.5 m$^2$g) manufactured by Denka Company Limited, or "AS-10" (average particle size $\varphi$39 $\mu$m, bulk density 1.8 to 2.4 g/cm$^3$) manufactured by Showa Denko K.K. was used as the aforementioned alumina particles.

(g) Atomized powder manufactured by Sanyo Special Steel Co., Ltd. was used as the aforementioned SUS316L stainless steel particles. Its alloy name was PSS316L, and its grain size was small enough to pass through a sieve having an opening of 45 $\mu$m, and large enough to stay on a sieve having an opening of 10 $\mu$m (-45/+10 $\mu$m).

(h) Atomized spherical copper powder "Cu-At-200" manufactured by Fukuda Metal Foil & Powder Co., Ltd. was used as the aforementioned copper particles. The average particle size was unknown, but the particles whose size was $\varphi$45 $\mu$m or less was 55.7%. The apparent density was 4.66 g/cm$^3$.

(i) Atomized spherical bronze powder "BRO-At-200" manufactured by Fukuda Metal Foil & Powder Co., Ltd. was used as the aforementioned bronze particles. The average particle size was unknown, but the particles whose size was $\varphi$45 $\mu$m or less was 82.7%. The apparent density was 4.96 g/cm$^3$, and the tin (Sn) content in components was 9.63%.

(j) Atomized aluminum powder "350F" manufactured by Manalco Ltd. was used as the aforementioned aluminum particles. The average particle size was $\varphi$14.47 $\mu$m.

(k) Maraging steel particles manufactured by Sandvik AB was used as the aforementioned maraging steel particles. Its alloy name was 18Ni300 steel. Grains whose size was $\varphi$38 $\mu$m or less was 99.5%, and the average particle size was $\varphi$32.4 $\mu$m.

The carbon particles obtained in each of the aforementioned Experimental Example 2 (3#4) and Experimental Example 3 (3#5), and the aforementioned base material particles were put in an "MP5 type compositor" manufactured by Nippon Coke & Engineering Co., Ltd., and mechanically combined with a blade rotation speed of 10,000 rpm and for a stirring time of 10 to 30 minutes to produce coated particles. The MP5 type compositor had a tank capacity of 6.5 L, a processing capacity of about 3 L, and a motor of 2.2 kW. The carbon particles and the base material particles were combined at the following specific combination ratios.

(a) Urethane resin particles "C-300" were set at 500 g, and the carbon particles obtained in Experimental Example 2 (3#4) were set at 5 mass%. Film thickness (estimated film thickness) estimated from the sizes and specific gravities of the base material particles and the carbon particles was 70 nm on these conditions. The aforementioned amount of the carbon particles is a value when the amount of the base material particles is regarded as 100 mass% (the same thing can be applied to the following paragraphs). That is, in (a), 500 g of the urethane resin particles were coated with 25 g of the aforementioned carbon particles.

(b-1) Acrylic resin particles "SE-010T" were set at 500 g, and the carbon particles obtained in Experimental Example 2 (3#4) were set at 2 mass%. Estimated film thickness was 13 nm.

(b-2) Acrylic resin particles "TAFTIC AR650M" were set at 500 g, and the carbon particles obtained in Experimental Example 2 (3#4) were set at 5 mass%. Estimated film thickness was 112 nm.

(b-3) Acrylic resin particles "J-4PY" were set at 230 g, and the carbon particles obtained in Experimental Example 3 (3#5) were set at 5 mass%. Estimated film thickness was 7 nm.

(c) High molecular weight polyethylene resin particles "MIPELON PM-200" were set at 250 g, and the carbon particles obtained in Experimental Example 3 (3#5) were set at 2 mass%. Estimated film thickness was 10 nm.

(d) The aforementioned PTFE particles were set at 200 g, and the carbon particles obtained in Experimental Example 3 (3#5) were set at 5 mass%. Estimated film thickness was 2 nm.

(e) SiC particles "SSC-A15" were set at 500 g, and the carbon particles obtained in Experimental Example 3 (3#5) were set at 2 mass%. Estimated film thickness was 39 nm.

(f-1) Inactive alumina particles "VERSAL-G series VGL-25" were set at 500 g, and the carbon particles obtained in Experimental Example 3 (3#5) were set at 5 mass%. The particle size distribution of "VERSAL-G series VGL-25" is not disclosed. Though not grasped correctly, estimated film thickness was 80 nm on the assumption that the average particle size (d50) was 15 $\mu$m.

(f-2) Inactive alumina particles "DAW-03" were set at 250 g, and the carbon particles obtained in Experimental Example 3 (3#5) were set at 5 mass%. Estimated film thickness was 21 nm.

(f-3) Inactive alumina particles "ASFP-20" were set at 100 g, and the carbon particles obtained in Experimental Example 3 (3#5) were set at 5 mass%. Estimated film thickness was 2 nm.

(f-4) Inactive alumina particles "AS-10" were set at 100 g, and the carbon particles obtained in Experimental Example 3 (3#5) were set at 5 mass%. Estimated film thickness was 207 nm.

(g) SUS316L stainless steel particles were set at 500 g, and the carbon particles obtained in Experimental Example 3 (3#5) were set at 2 mass%. Estimated film thickness was 174 nm.

(h) Copper particles were set at 500 g, and the carbon particles obtained in Experimental Example 3 (3#5) were set at 0.5 mass%. Estimated film thickness was 67 nm.

(i) Bronze particles were set at 500 g, and the carbon particles obtained in Experimental Example 3 (3#5) were set at 0.5 mass%. Estimated film thickness was 29 nm.

(j) Aluminum particles were set at 250 g, and the carbon particles obtained in Experimental Example 3 (3#5) were set at 5 mass%. Estimated film thickness was 123 nm.

(k) Maraging steel particles were set at 500 g, and the carbon particles obtained in Experimental Example 3 (3#5) were set at 0.5 mass%. Estimated film thickness was 72 nm.

Next, the obtained coated particles were observed by a field emission scanning electron microscope (FE-SEM), and it was checked whether the surfaces of the base material particles were coated with the carbon particles or not. "JSM-7000F" manufactured by JEOL Ltd. was used as the FE-SEM, with an accelerating voltage of 7.5kV, an imaging method of secondary electron imaging, and an observation magnification of 200 to 3,000 times.

Further, a part of a surface layer of a coated particle was cut out by a focused ion beam (FIB) apparatus, and observed. "IM-4000 (ion milling system)" manufactured by Hitachi High-Technologies Corporation was used as a section processing apparatus, using an ion source of argon, an accelerating voltage of 4.0kV, and a processing temperature of -10°C. A section was observed by "S-5500 (field emission scanning electron microscope; FE-SEM)" manufactured by Hitachi High-Technologies Corporation, using an accelerating voltage of 2.0kV, an imaging method of secondary electron imaging, a reflected electron image (LA-BSE), and an observation magnification of 200 to 25,000 times.

In a drawing substitute photograph b of FIG. 7, among the obtained coated particles, the surfaces of the coated particles obtained in the aforementioned paragraph (a) were observed and taken by the FE-SEM. In a drawing substitute photograph a of FIG. 7, the urethane resin particles which had not been coated with the carbon particles were taken.

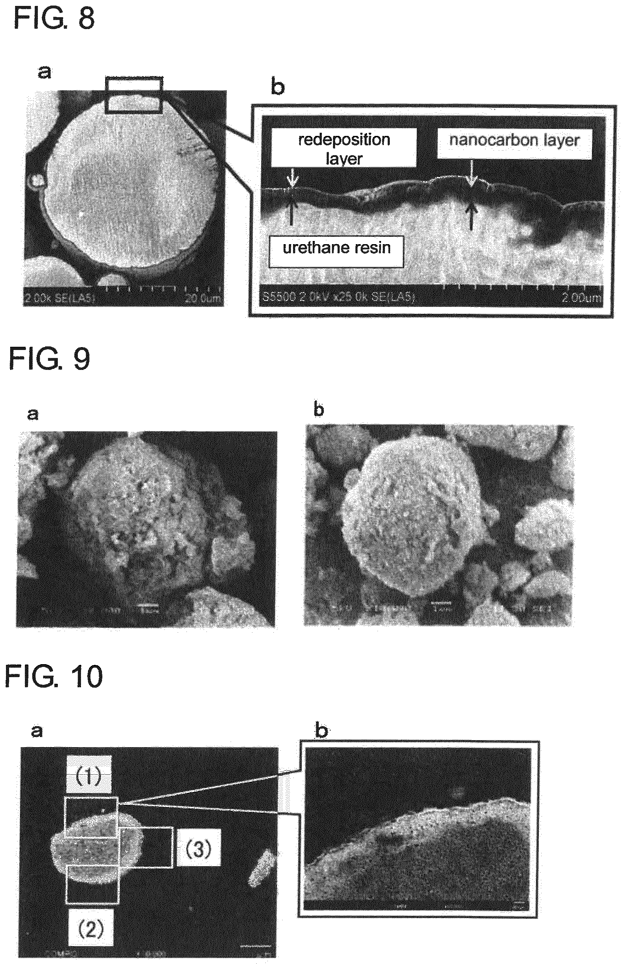

Further, in a drawing substitute photograph a shown in FIG. 8, a coated particle obtained in the aforementioned paragraph (a) was frozen in a cryo CP apparatus and then cut with an ion beam, and a section of the coated particle was observed and taken by the FE-SEM. A drawing substitute photograph b shown in FIG. 8 is a photograph in which a part enclosed by a rectangle in the drawing substitute photograph a shown in FIG. 8 is enlarged.

In a drawing substitute photograph b of FIG. 9, among the obtained coated particles, the surfaces of the coated particles obtained in the aforementioned paragraph (f-1) were observed and taken by the FE-SEM. In a drawing substitute photograph b of FIG. 9, the inactive alumina particles which had not been coated with the carbon particles were taken.

Further, in a drawing substitute photograph a shown in FIG. 10, a coated particle obtained in the aforementioned paragraph (f-1) was cut in the CP apparatus, and a section of the coated particle was observed and taken by the FE-SEM. A drawing substitute photograph b shown in FIG. 10 is a photograph in which a part (1) of parts enclosed by rectangles in the drawing substitute photograph a shown in FIG. 10 is enlarged.

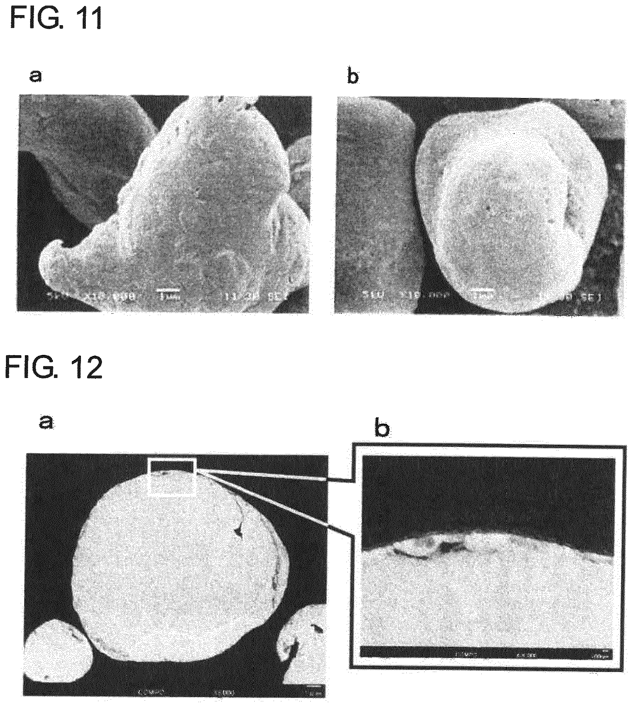

In a drawing substitute photograph b of FIG. 11, among the obtained coated particles, the surfaces of the coated particles obtained in the aforementioned paragraph (j) were observed and taken by the FE-SEM. In a drawing substitute photograph a of FIG. 11, the aluminum particles which had not been coated with the carbon particles were taken.

Further, in a drawing substitute photograph a shown in FIG. 12, a coated particle obtained in the aforementioned paragraph (j) was cut in the CP apparatus, and a section of the coated particle was observed and taken by the FE-SEM. A drawing substitute photograph b shown in FIG. 12 is a photograph in which a part enclosed by a rectangle in the drawing substitute photograph a shown in FIG. 12 is enlarged.

As is apparent from FIG. 7, FIG. 9 and FIG. 11, it is understood that the surface of the base material particle was coated with the carbon particles. In addition, as is apparent from FIG. 8, the film thickness of the observed coated particle was about 30 nm in the smallest part and about 400 nm in the largest part. The film thickness was observed as 40 to 100 nm on average. It is understood that the observed average film thickness substantially agrees with the estimated film thickness of 70 nm. In FIG. 8, a redeposited layer means that waste generated during cutting with an ion beam to obtain a section is deposited again on a surface of a sample.

Next, the coated particles obtained by coating the surfaces of the base material particles with the carbon particles obtained in the aforementioned Experimental Example 3 (3#5) were supported on the surface of each substrate material by thermal spraying, so as to produce a functional material. Specifically, the coated particles obtained in the aforementioned paragraph (g) were used as the aforementioned coated particles. That is, in the coated particles (g), the SUS316L stainless steel particles were coated with the carbon particles obtained in Experimental Example 3 (3#5).

The coated particles were supported on the surface of the substrate material by plasma spraying. A SUS304 stainless steel sheet, a carbon steel sheet, a copper sheet, a bronze sheet and an aluminum sheet were used as the substrate material. The Plasma spraying was performed using an F4 type plasma spraying apparatus manufactured by Sulzer Metco Japan Ltd. The measurement conditions of the plasma spraying are shown in the following Table 3.

[Table 3]

|  | (g) |
|---|---|
| base material particle | SUS316L particle manufactured by Sanyo Special Steel Co., Ltd. |
| carbon particle | Experimental Example 3 (3#5) |

(continued)

| | | (g) |
|---|---|---|
| base material particle | | SUS316L particle manufactured by Sanyo Special Steel Co., Ltd. |
| carbon particle proportion | | 2 mass% |
| kind of substrate material | | metal |
| argon | pressure | 75 psi (5.25 kg/cm$^2$) |
| | flow rate | 55.0 SLPM |
| hydrogen | pressure | 50 psi (3.50 kg/cm$^2$) |
| | flow rate | 9.5 SLPM |
| current | | 600 A |
| voltage | | 72 V |
| spraying distance | | 100 mm |
| traverse velocity | | 750 m/s |
| step | | 3 mm |
| power feed rate | | 20 g/min |
| number of paths | | 5 | 1 |
| preheating of base material | | no |
| SLPM: standard liter/min | | |

When the mass of the obtained sample of the metal substrate material was measured after thermal spraying, increase in mass was detected. Thus, it was proved that the coated particles were supported on the surface of the substrate material by the plasma spraying.

In addition, the film thickness of the functional material obtained by thermally spraying the coated particles obtained in the aforementioned paragraph (g) was estimated from the increase in mass. As a result, it was estimated that a thermally sprayed coating of about 30 to 70 $\mu$m on average was formed out of the coating particles.

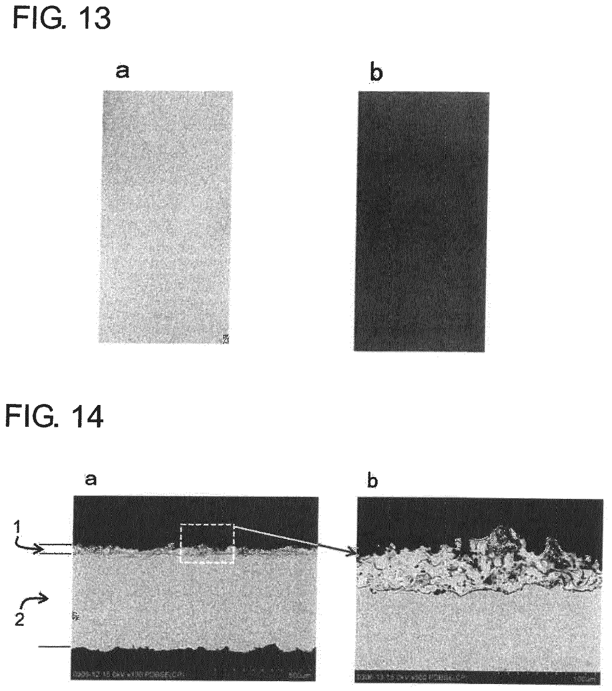

FIG. 13 shows drawing substitute photographs in which the SUS304 stainless steel sheet used as the substrate material and the obtained functional material were taken. Coated particles obtained by mechanical combination of 2 mass% of the carbon particles in Experimental Example 3 (3#5) with the base material particles of SUS316 stainless steel powder were used as a material to be thermally sprayed. In a drawing substitute photograph a of FIG 13, the substrate material against which the coated particles had not been plasma-sprayed yet was taken. In a drawing substitute photograph b of FIG. 13, the functional material in which the coated particles obtained in the aforementioned paragraph (g) had been plasma-sprayed against the substrate material was taken. When the film thickness of the functional material was estimated from the increase in mass, it was estimated that a thermally sprayed coating of about 48 $\mu$m on average was formed out of the coated particles.

In a drawing substitute photograph a shown in FIG. 14, the functional material shown in the photograph b of FIG. 13 was cut by a fine cutter, and a section thereof was observed and taken by an optical microscope. In a drawing substitute photograph b of FIG. 14, the section was observed and taken by the FE-SEM so as to enlarge a part enclosed by a rectangle in the section. In the drawing substitute photograph a shown in FIG. 14, the reference numeral 1 designates a thermally sprayed coating formed out of the coated particles, and the reference numeral 2 designates a SUS304 stainless steel sheet as the substrate material.

As is apparent from FIG. 13 and FIG. 14, it is understood that coated particles can be supported on a substrate material by plasma spraying. In addition, the film thickness of the thermally sprayed coating of the coated particle observed in FIG. 14 was about 20 $\mu$m in the smallest part and about 60 $\mu$m in the largest part. The film thickness was observed as 40 to 50 $\mu$m on average. It is understood that the observed average film thickness substantially agrees with the estimated film thickness of 48 $\mu$m.

Next, the coated particles obtained by coating the surfaces of the base material particles with the carbon particles obtained in the aforementioned Experimental Example 3 (3#5) were supported on the surface of the substrate material by plating, to produce a functional material. Alumina powder having a diameter $\varphi$4.2 $\mu$m was used as the base material particles. An aluminum alloy (A5052) sheet was used as the substrate material.

The carbon particles obtained in Experimental Example 3 (3#5), and the aforementioned base material particles were put in an "MP5 type compositor" manufactured by Nippon Coke & Engineering Co., Ltd., and mechanically combined with a blade rotation speed of 10,000 rpm and for a stirring time of 10 to 30 minutes to produce coated particles. The MP5 type compositor had a tank capacity of 6.5 L, a processing capacity of about 3 L, and a motor of 2.2 kW. The carbon particles and the base material particles were combined at the following specific combination ratio.

(f-2) Inactive alumina particles "DAW-03" were set at 250 g, and the carbon particles obtained in Experimental Example 3 (3#5) were set at 5.0 mass%. Estimated film thickness was 21 nm.

Then, the aforementioned coated particles were supported on the surface of the substrate material by plating. Electroless (chemical) plating was used as the plating. A plating bath was used in which the aforementioned coated particles were dispersed in an Ni-P bath so that the concentration of the coated particles could reach 2 g/L. The plating bath temperature was set at 80°C. A plating solution was stirred during the plating. The plating time was set at 60 minutes.

When the mass of the obtained sample after the plating was measured, increase in mass could be detected. It was understood that the coated particles were supported on the surface of the substrate material by the plating.

The film thickness of the plated layer in the sample after the plating was measured. The result is shown in the following Table 4. The coverage of the surface of the substrate material with the plated layer was 100%.

As a comparative sample, a plated layer was formed on the surface of the substrate material on the same conditions except that an Ni-P bath where the aforementioned coated particles were not dispersed was used. The film thickness of the plated layer in the sample after the plating was measured. The result is shown in the following Table 4. The coverage of the surface of the substrate material with the plated layer was 100%.

As is apparent from the following Table 4, it can be considered that particularly in application to electroless plating, effects such as improvement of productivity due to increase in deposition rate, reduction in mist or environmental load within a factory due to decrease in bath temperature, reduction in electric power cost, simplification of operation, etc. can be obtained by the combination of the coated particles, in addition to advantages as to lubricity and wear resistance.

[Table 4]

| | after plating | |
|---|---|---|
| | with coated particles | without coated particles |
| coverage (%) with plated layer | 100 | 100 |
| film thickness ($\mu$m) of plated layer | 50 | 20 |

Although the present invention has been described in detail and with reference to its specific embodiment, it is obvious for those skilled in the art that various changes or modifications can be made on the invention without departing from the spirit and scope thereof.

The present application is based on a Japanese patent application (Japanese Patent Application No. 2015-235235) filed on December 1, 2015, the contents of which are incorporated herein by reference.

Industrial Availability

The coated particle according to the present invention in which the base material surface is coated with carbon particles higher in nanodiamond proportion than in the background art can be expected as a new material.

Description of Reference Numerals

10   raw material substance
12   explosive substance
20   explosion container
22   booster
24   detonator or detonating cord
30   cooling container
32   coolant
34   stand

36    perforated disk

**Claims**

1. A coated particle in which a surface of a base material particle is coated with carbon particles produced by a step of disposing an explosive substance which shows a liquid state at normal temperature and normal pressure in a periphery of a raw material substance containing an aromatic compound having three or more nitro groups, and a step of detonating the explosive substance.

2. The coated particle according to claim 1, wherein the carbon particles are fluorinated.

3. A functional material in which the coated particles according to claim 1 or 2 are supported on a surface of a substrate material.

4. A method for producing a coated particle, the method comprising:

   a step of disposing an explosive substance which shows a liquid state at normal temperature and normal pressure in a periphery of a raw material substance containing an aromatic compound having three or more nitro groups;
   a step of detonating the explosive substance to obtain a carbon particle; and
   a step of coating a surface of a base material particle with the obtained carbon particle by a mechanical combination method.

5. The method for producing a coated particle according to claim 4, wherein, after the carbon particles are fluorinated, the surface of the base material particle is coated with the carbon particles by the mechanical combination method.

6. A method for producing a functional material, wherein the coated particles obtained by the production method according to claim 4 or 5 are supported on a surface of a substrate material.

7. A method for producing a functional material, wherein the coated particles obtained by the production method according to claim 4 or 5 are supported on a surface of a substrate material and then fluorinated.

8. The method for producing a functional material according to claim 6, wherein the coated particles are supported on the surface of the substrate material by spraying, rolling or plating.

9. The method for producing a functional material according to claim 7, wherein the coated particles are supported on the surface of the substrate material by spraying, rolling or plating.

## FIG. 1

## FIG. 2

mechanical action

collision/adhesion    crushing/dispersing    precise fine mixing    bonding/implanting

graded structure/composition ⟶

FIG. 3

# FIG. 4

a

b

# FIG. 5

FIG. 6

Calibration curve of diamond

FIG. 7

a
b

FIG. 8

FIG. 9

FIG. 10

FIG. 11

a

b

FIG. 12

a

b

# FIG. 13

a
b

# FIG. 14

a
b

1
2

## INTERNATIONAL SEARCH REPORT

| | International application No. |
|---|---|
| | PCT/JP2016/085595 |

**A. CLASSIFICATION OF SUBJECT MATTER**
*C01B31/06*(2006.01)i, *C01B31/04*(2006.01)i, *C23C4/04*(2006.01)i, *C23C18/52* (2006.01)i

According to International Patent Classification (IPC) or to both national classification and IPC

**B. FIELDS SEARCHED**

Minimum documentation searched (classification system followed by classification symbols)
C01B31/06, C01B31/04, C23C4/04, C23C18/52

Documentation searched other than minimum documentation to the extent that such documents are included in the fields searched
Jitsuyo Shinan Koho           1922–1996   Jitsuyo Shinan Toroku Koho   1996–2016
Kokai Jitsuyo Shinan Koho     1971–2016   Toroku Jitsuyo Shinan Koho   1994–2016

Electronic data base consulted during the international search (name of data base and, where practicable, search terms used)
JSTPlus/JST7580/JSTChina(JDreamIII)

**C. DOCUMENTS CONSIDERED TO BE RELEVANT**

| Category* | Citation of document, with indication, where appropriate, of the relevant passages | Relevant to claim No. |
|---|---|---|
| Y A | JP 2015-127279 A  (Kobe Steel, Ltd.), 09 July 2015 (09.07.2015), claim 3; paragraph [0004] & US 2016/0318809 A1 claim 3; paragraph [0004] & WO 2015/098982 A1      & EP 3088357 A1 | 1,2 3-9 |
| Y A | JP 2013-151418 A  (Vision Development Co., Ltd.), 08 August 2013 (08.08.2013), claim 4 (Family: none) | 1,2 3-9 |
| A | JP 2014-69308 A  (Tadamasa FUJIMURA), 21 April 2014 (21.04.2014), claims 1 to 4 (Family: none) | 1-9 |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered  to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 21 December 2016 (21.12.16) | Date of mailing of the international search report 10 January 2017 (10.01.17) |
|---|---|
| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (January 2015)

## INTERNATIONAL SEARCH REPORT

International application No.

PCT/JP2016/085595

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-84443 A (National University Corporation University of Fukui), 28 April 2011 (28.04.2011), claim 1; paragraph [0017] (Family: none) | 1-9 |
| A | WO 2015/163470 A1 (Kyocera Corp.), 29 October 2015 (29.10.2015), claim 1 (Family: none) | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4245310 B
- JP 5155975 B
- JP 2014113057 A
- JP 2015235235 A

**Non-patent literature cited in the description**

- Dynamic High Pressure (Detonation Method). **YOZO KAKUDATE.** Handbook of Diamond Technology. NGT, January 2007, vol. 2-3, 28-33
- **SATOSHI TOMITA et al.** Diamond nanoparticles to carbon onions transformation: X-ray diffraction studies. *Carbon,* 2002, vol. 40, 1469-1474
- **DILIP K. SINGH et al.** Diameter dependence of interwall separation and strain in multiwalled carbon nanotubes probed by X-ray diffraction and Raman scattering studies. *Diamond & Related Materials,* 2010, vol. 19, 1281-1288